# EUROPEAN PATENT SPECIFICATION

(11) **EP 3 580 901 B1**
(45) Date of publication and mention of the grant of the patent: **28.07.2021**
(21) Application number: 17705326.1
(22) Date of filing: 09.02.2017
(51) Int. Cl.: H04L 29/06, H04L 29/08, G06F 21/60, H04L 12/46, H04W 12/033

(54) **CONNECTION APPARATUS FOR ESTABLISHING A SECURED APPLICATION-LEVEL COMMUNICATION CONNECTION**
VERBINDUNGSVORRICHTUNG ZUM AUFBAU EINER GESICHERTEN KOMMUNIKATIONSVERBINDUNG AUF ANWENDUNGSEBENE
APPAREIL DE CONNEXION POUR L'ÉTABLISSEMENT D'UNE CONNEXION DE COMMUNICATION SÉCURISÉE AU NIVEAU APPLICATION

(43) Date of publication of application: 18.12.2019
(73) Proprietor: Cumulocity GmbH, 40549 Düsseldorf (DE)
(72) Inventor: EICKLER, Andre, 40468 Düsseldorf (DE); WILDHAGEN, Jens, 40476 Düsseldorf (DE); VAILLANT, Stefan, 40489 Düsseldorf (DE)
(74) Representative: Cohausz & Florack
(86) International application number: PCT/EP2017/052809
(87) International publication number: WO 2018/145744

(56) References cited:
- US-A1- 2010 125 899
- US-A1- 2014 006 347
- US-A1- 2016 261 564
- US-A1- 2017 005 829

## Description

The invention relates to a connection apparatus, in particular, in form of a connection server, for establishing a secured application-level communication connection between at least one first device and at least one second device via at least one communication network. The invention relates also to a system comprising the connection apparatus, a method for establishing a secured application-level communication connection between at least one first device and at least one second device by means of at least one connection apparatus and a computer program.

Nowadays, more and more (communication) devices are connected to a communication network (e.g. Internet) in order to communicate with each other. For instance, a first device can communicate with a second device in order to remotely control, for example, an industrial application of the second device. However, the (direct) connection of devices to a communication network creates security risks. More particularly, a steady concern is to avoid an unauthorized access to e.g. the second device. In order to create a secured communication connection between two devices it is known to establish a tunnel communication connection between the first device and the second device via the least one communication network.

More particularly, according to a typical scenario, a user of a first device wants to get access to a second (remote) device (e.g. a remote IoT (Internet of Things) device) for remotely monitoring and/or controlling at least one industrial appliance of the second device. The industrial appliance of the second device may be a manufacturing robot or another machine. A second device may optionally comprise a local HMI (human-machine- interface).

The first device and the second device may each comprise a communication module e.g. for an internet connection (e.g. secured by a firewall and/or other means). According to prior art, the first device of the user can set up a state-of-the-art VPN (Virtual Private Network) connection from the first device to the second device. It is noted that such a VPN (Virtual Private Network) connection can be directly established from the first device with the second device or indirectly via a connection apparatus, such as a cloud server. Upon establishing the state-of-the-art VPN connection between the first device and the second device, the user may launch e.g. a VNC (Virtual Network Computing) application. After the successful launch the user may be able to view and/or remotely control the appliance(s) via e.g. the local HMI of the second device.

However, such a conventional secured communication connection has several disadvantages.

For instance, a VPN client (software) application must be installed on the first device and on the second (remote) device. Further, VPN configurations and set-ups are required. The communication over a VPN connection is also not optimized regarding traffic overhead. There exists the risk of IP address (Internet Protocol address) conflicts. Furthermore, launching of a VPN tunnel connection and launching of an application communicatioin via the VPN tunnel e.g. VNC requires several steps, in particular, if a connection apparatus is used.

One further problem of prior art systems and methods are security issues. More particularly, in a native VPN setup, all ports and many IP addresses of the second device, and thus, e.g. of a connected industrial network are opened up to the first device in form of e.g. the user's computer. This makes the industrial network fragile for attacks from the office network and/or first device. Even in hardened, secured VPN setups the second device local application's (e.g. VNC) port would be opened to the first device, making the second device accessible for attacks via the local application. Eventually, a user of the first device needs to deal with application (e.g. VNC) passwords himself. This typically leads to using the same password for different application instances (e.g. different VNC servers) on different devices, and to shared password usage by many users.

Document US 2014/0006347 A1 discloses a system and method for establishing a secure communication connection between a first device and an enterprise resource of an enterprise system. From document US 2017/005829 A1 A management server is known which receives a plurality of communication requests including a first communication request and a second communication request and controls the order of execution of a plurality of tunnel connection requests which are based on the plurality of communication requests. Eventually, document US 2016/261564 A1 discloses a virtual private access method implemented by a cloud system, which includes receiving a request to access resources from a user device. wherein the resources are located in one of a public cloud and an enterprise network and the user device is remote therefrom on the Internet.

Therefore, it is an object of the present invention to provide a connection apparatus, a method and a system which at least reduce the above drawbacks, and in particular, provide for an establishment of a secured communication connection in an easier and safer manner.

The above object is solved according to a first aspect of the invention by a connection apparatus according to claim 1. The connection apparatus for establishing a secured application-level communication connection between at least one first device and at least one second device is, in particular, a connection server. The connection apparatus comprises at least one connection controlling module configured to initiate transmitting of at least one second request message comprising at least one communication data set with at least one connection key to the second device upon receipt of at least one first request message from the first device for establishing the secured application-level communication connection. The connection controlling module is configured to check the connection key used for establishing at least one second tunnel communication connection between the second device and connection apparatus based on the (previously) transmitted connection key. The connection controlling module is configured to establish a tunnel communication connection by pairing at least a first tunnel communication connection (previously) established between the first device and the connection apparatus with the second tunnel communication connection based on the check result. The tunnel connection is established such that the secured application-level communication connection can be established over the established tunnel communication connection..

In contrast to prior art, according to the first aspect of the invention, an improved security standard and usability is achieved by a connection apparatus having a connection controlling module configured to control and manage the establishment of a secured application-level communication connection between at least two devices. In particular, by using a connection key transmitted to the second device from the connection controlling module for establishing a second tunnel communication connection and by pairing said second tunnel communication connection with at least one previously established first tunnel communication connection high security standards are provided. In particular, in contrast to prior art, a tunnel connection between the first and the second device is generically established and upon its generic establishment an application-level communication connection is establishable over the tunnel connection e.g. by one of the first device, second device and connection apparatus.

The connection apparatus and connection arrangement, respectively, may be a server, such as a cloud server. The connection apparatus may comprise communication means (e.g. one or more sending/receiving module(s)) configured to communicate with other (computer) device(s) via at least one communication network. In particular, the communication means enables to establish an Internet connection e.g. via TCP (Transmission Control Protocol). The Internet connection may be establishable, for example, over a fixed line technology, a cellular technology and/or a wireless bearer technology.

The connection apparatus comprises at least one connection controlling module. The connection controlling module is configured to control and manage at least the establishment of a secured application-level communication connection between a first (computer) device and a second (computer) device. The second device is, in particular, a remote device. In other words, the second device is located away from the first device.

The connection apparatus comprises at least one connection controlling module configured to initiate establishment of a second tunnel communication connection. At least upon receipt of a first request message from a first device, the connection controlling module causes the establishment of a second tunnel communication connection between the connection apparatus and at least one second device via the at least one communication network. In particular, the connection controlling module causes transmission of a communication data set, e.g. via the communication means, to the second device which may be indicated or specified in the received first request message. For instance, the received first request message can comprise an identification (e.g. a communication address) of the second device.

The communication data set comprises at least one connection key. The connection key may be a secret information needed to establish a second tunnel communication connection between the second device and the connection apparatus. For instance, the connection apparatus can comprise a key generator and/or key storage and/or a (secured) connection to a key generator and/or key storage. After transmitting the connection key, the transmitted connection key (or a corresponding information) and/or the identification of the second device can be (at least intermediately) stored in the connection apparatus for a subsequent match with a connection key used for establishment the second tunnel communication connection and the identification of the second device establishing the second tunnel communication connection, respectively.

A connection key according to the present application may be a data piece needed to verify whether a specific second device is entitled to establish the second tunnel communication connection with the connection apparatus.

Preferably, the communication data set sent to the second device may comprise further data, such as an instruction to open the second tunnel communication connection and/or address information (e.g. IP, port) for said connection.

Based on the received communication data set the second device may establish a second tunnel communication with the connection apparatus. The connection apparatus, in particular, the connection controlling module may be configured to detect an establishment (e.g. an attempt of establishment, such as a receipt of a respective message/information) of the second tunnel communication connection. Upon such detection, the connection controlling module may check at least the connection key used for establishment of said second tunnel communication connection. Preferably, the connection controlling module can be configured to check, e.g. by a comparing operation, whether the used key corresponds to the previously transmitted connection key. For instance, the used connection key can be compared with the transmitted connection key and/or an information corresponding to the transmitted connection key. If the used connection key corresponds to the transmitted connection key (or the information) the check result is positive (otherwise negative).

Based on the check result, the connection apparatus, in particular, the connection controlling module, initiates pairing of a first tunnel communication connection with the established second tunnel communication connection for establishing a (generic) tunnel connection between first and second device. In particular, the paring procedure may be only conducted if the check result is positive, as described above. If the check result is negative the generation of a secured application-level communication connection may be cancelled. For instance, the establishment of the second tunnel communication connection may be (already) cancelled. Pairing means that the respective endpoints of the at least one first tunnel communication connection and the second communication connection can be connected (paired). Upon establishment of the tunnel communication connection between the first and the second device, a secured application-level communication connection can be established over the established tunnel communication connection. In particular, applications of the respective devices can securely and automatically communicate with each other.

The first tunnel communication connection is, in particular, arranged between the first (requesting) device and the connection apparatus. For instance, a user of the first device may request, preferably, via a local application installed on the first device to initiate remote access to a specific second device. The local application of the first device may establish a first tunnel communication connection from the first (computer) device to the connection apparatus (e.g. a server, such as a cloud hosted IoT platform). Examples of such applications are desktop sharing applications, such as VNC (Virtual Network Computing). VNC is a graphical desktop sharing system that uses the Remote Frame Buffer protocol (RFB) to remotely control other device(s). It transmits the keyboard and mouse events from one (computer) device to another, relaying the graphical screen updates back in the other direction, over a network.

According to the present application, a tunnel communication connection is a secured (e.g. encrypted) data connection between two units (e.g. first device, second device, connection apparatus, etc.) wherein both units support at least one tunnel protocol (e.g. for encryption). Exemplified and non-exhaustive tunnel protocols are WebSocket or SSH. Thereby, SSH (Secure Shell) is a cryptographic network protocol for operating network services securely over an unsecured network. WebSocket is a computer communications protocol, providing full-duplex communication channels over a single TCP connection.

According to a first embodiment of the connection apparatus according to the present application, the connection apparatus may comprise at least one authentication module configured to conduct at least one authentication process for authenticating the first device and/or at least one user of the first device prior to or during the establishment of the first tunnel communication. At least the (final) establishment of the first tunnel communication connection may depend on the authentication result of the authentication process. Preferably, also the actual transmission of the communication data set (in form of a second request message) may depend on the result of the authentication process. In particular, only if the authentication result is positive, i.e. the requesting first device and/or its user is (actually) authorized to at least establish a first tunnel communication connection with the connection apparatus, an (successful) establishment of the first tunnel communication connection is enabled. Otherwise, the establishment may be cancelled. The authentication of the first device and/or its user may be checked by comparing an (unique) identifier assigned to the first device and/or its user with previously stored identifier(s) of authorized first device(s) and/or user(s). Additionally, a secret information (e.g. password or the like) can be checked in a authentication process. By conducting a authentication process the security can be further increased.

It may be possible that a first device or its user is authorized to establish a first tunnel communication connection with the connection apparatus but not authorized to establish a secured application-level communication connection with a (specific) second device. In order to further increase the security, according to a preferred embodiment of the present application, the authentication module may be configured to conduct at least one authorization process for checking the authorization of the first device and/or the user of the first device to initiate a secured connection with the second device. Initiating of the transmission of the second request message to the second device may depend on the authentication result of the authorization process. In other words, a second request message may only be transmitted if the authentication result of the authorization process is positive, i.e. the first device and/or the user is (actually) authorized to access said second device. In the authorization process it can be checked whether the first device and/or its user is authorized to access the second device e.g. specified or indicated in the first request message. For instance, each identifier of an authorized user or first device can be stored together with one or more identifier(s) of second device(s) that can be accessed by the respective first device(s) and/or user(s).

It shall be understood that the first and the authorization processes can be combined to a single process. Further, the authentication module can comprise two (separate) function units for conducting the respective authentication and authorization processes.

One further issue of prior art systems is that two devices to be connected must each support the same tunnel protocol in order to securely communicate with each other. Otherwise the communication and/or security of a communication between the devices might be not possible or at least restricted. In order to enable also a secure and/or error-free communication between devices which do not support the same tunnel protocol, the present application proposes to provide a connection apparatus having at least one protocol handler module. In particular, according to an embodiment of the present application, the connection apparatus may comprise at least one protocol handler module configured to change a received data set (format) transmitted in accordance with a first protocol in accordance with a further protocol, wherein the further protocol is used to forward the received data set. Changing the data set (format) may comprise a change of the protocol used for forwarding the data set. In particular, the data set format can be changed without amending the data content to be transmitted.

In order to detect whether different protocols are actually used, according to a preferred embodiment, the protocol handler module may be configured to compare a first protocol used for data transmission via the first tunnel communication connection with a second protocol used for data transmission via the second tunnel communication connection. The protocol handler module may be configured to change a received data set based on the comparison result. In particular, the protocol handler module can detect the type and/or version of the respectively used protocols. Based on the detection result the protocol of a received data set can be changed. More particularly, according to a particular preferred embodiment, the protocol handler module may be configured to change a received data set by adapting a first protocol version (of a received data set) to a second protocol version (used to forward said data set). Alternatively or additionally, the protocol handler module may be configured to change a received data set by converting a first protocol type (of a received data set) to a second protocol type (used to forward said data set). This enables a communication via a tunnel connection between two (computer) devices, wherein each device may use a different tunnel protocol.

According to a preferred embodiment of the present application, the connection apparatus may comprise at least one code storage module configured to store at least one code required to authenticate a first device or a user of the first device to the second device and/or an appliance of the second device. The connection apparatus may comprise at least one code handler module configured to conduct a further authentication process with the second device and/or the appliance of the second device by using the stored code. In order to increase the security it may be further checked whether the first device and/or its user is entitled to access the second device and/or a specific appliance of a plurality of appliances (applications) of the second device. For instance, an access may only be allowed for a specific appliance. The further authentication process may be conducted by the connection apparatus and/or the second device. This means that the first device is not involved in the further authentication process. In particular, a (security) code, such as a password, key or the like, can be previously stored in a code (or key) storage module and e.g. provided by the first device. The stored code may be assigned to the first device (or user) and second device (e.g. to their respective IDs). In order to authenticate the first device (or its user) to the second device the (security) code handler module may determine the specific code e.g. based on the IDs of the first and the second device and may forward the determined code to the second device. The second device may compare the received code with stored codes of authorized first device(s) and/or user(s). In case of a match, the second device may transmit a positive authentication result message to the connection apparatus. Otherwise, the process can be cancelled. In an automatic manner and without a user interaction, the further authentication process can be conducted.

It shall be understood that each code must be pre-provided to the connection apparatus e.g. in course of an initialization process.

Preferably, the code handler module may be configured to conduct the further authentication process by initiating of transmitting of an authentication data set comprising the code to the second device. For instance, the second request message can (additionally) comprise the authentication data set. Alternatively or additionally, upon receipt of an authentication request message from the second device the code handler module may be configured to initiate transmitting of a response message comprising said authentication data set.

According to the present application it is possible to simultaneously access a second device by two to more first devices and users, respectively. Simultaneously means that a second device can be accessed at the same time by at least two different first devices. In order to enable such an access, according to a preferred embodiment, the application proposes that the connection controlling module may be configured to establish a secured application-level communication connection between a (first) first device and the second device and at least one further first device and the second device by pairing a (first) first tunnel communication connection established between the (first) first device and the connection apparatus with the second tunnel communication connection and by pairing a further first tunnel communication connection established between the further first device and the connection apparatus with the second tunnel communication connection.

In a particularly preferred embodiment, the connection apparatus may be a distributed server arrangement comprising a plurality of (server) nodes. Since a first tunnel communication connection may be connected between a first node and the first device and the second tunnel communication connection may be connected between a further node and the second device, according to a further embodiment, the present application proposes that the connection apparatus may comprise a first node with a first connection controlling module connectable to at least one further node of the connection apparatus, wherein the further node comprises a further connection controlling module. The first connection controlling module may be configured to initiate transmitting of at least an information (e.g. a hash code or a similar data set) relating to the connection data set, in particular, the connection key (e.g. the hash code of the connection key) to the at least one further node, for instance, upon a positive authentication result of the authentication process. The at least one further node may comprise an information storage module configured to store the received information. Preferably, the first node may transmit said information to all other nodes in order to inform all other nodes about said information. The transmitted information may be a data set needed to verify whether a specific second device is entitled to establish the second tunnel communication connection.

According to a preferred embodiment, the further connection controlling module of the further node may be configured to check the connection key used for establishing at least one second tunnel communication connection between the further node of the connection apparatus and the second device based on the stored information (e.g. a hash code of the connection key, the connection key itself and/or a similar data set). The further connection controlling module may be configured to establish at least a third tunnel communication connection between the further node and the first node based on the check result. In particular, the pairing of the first tunnel communication connection and the second tunnel communication connection (in particular, their respective endpoints) can include the establishment of a further (server internal) tunnel communication connection between the respective nodes of the distributed connection apparatus. Also in case of a distributed connection apparatus, a high security can be provided.

As previously described according to a preferred embodiment, the information is a hash code of the connection key. The distribution of the hash key itself can be avoided. Alternatively or additionally, the information storage module, preferably a cache, may be configured to store the information until expiry of a predefined time (limit). Thereby, a flooding can be prevented. The security can be further improved.

A further aspect of the present invention is a (communication) system. The system comprises at least one (previously described) first device, at least one (previously described) second device and at least one previously described connection apparatus. The devices and apparatus(es) can be connectable to at least one communication network, as previously described.

Furthermore, an aspect of the present invention is a method for establishing a secured application-level communication connection between at least one first device and at least one second device by means of at least one connection apparatus, in particular, a previously described connection apparatus. The method comprises:
- initiating of transmitting of at least one second request message comprising at least one communication data set with at least one connection key to the second device upon receipt of at least one first request message from the first device for establishing the secured application-level communication connection,
- checking the connection key used for establishing at least one second tunnel communication connection between the connection apparatus and the second device based on the transmitted connection key,
- establishing secured tunnel communication connection by pairing at least a first tunnel communication connection established between the first device and the connection apparatus with the second tunnel communication connection based on the check result, and
- wherein the tunnel connection is established such that the secured application-level communication connection can be established over the established tunnel communication connection.

The method can be used to operate a previously described connection apparatus and/or a previously described system.

A still further aspect of the present invention is a computer program with instructions executable on a processor such that a (previously described) connection apparatus is operated according to the previously described method. The computer program can be embodied in a storage medium readable by a computer.

The features of the methods, systems, apparatuses and computer programs can be freely combined with one another. In particular, features of the description and/or the dependent claims, even when the features of the dependent claims are completely or partially avoided, may be independently inventive in isolation or freely combinable with one another.

These and other aspects of the present patent application become apparent from and will be elucidated with reference to the following figures. The features of the present application and of its exemplary embodiments as presented above are understood to be disclosed also in all possible combinations with each other.

In the figures show:
- Fig. 1: a schematic view of an embodiment of a system according to the present application;
- Fig. 2: a schematic view of a further embodiment of a system according to the present application;
- Fig. 3: a diagram of an embodiment of a method according to the present invention;
- Fig. 4: a diagram of a further embodiment of a method according to the present invention; and
- Fig. 5: a schematic view of a further embodiment of a system according to the present application.

Like reference numerals in different figures indicate like elements.

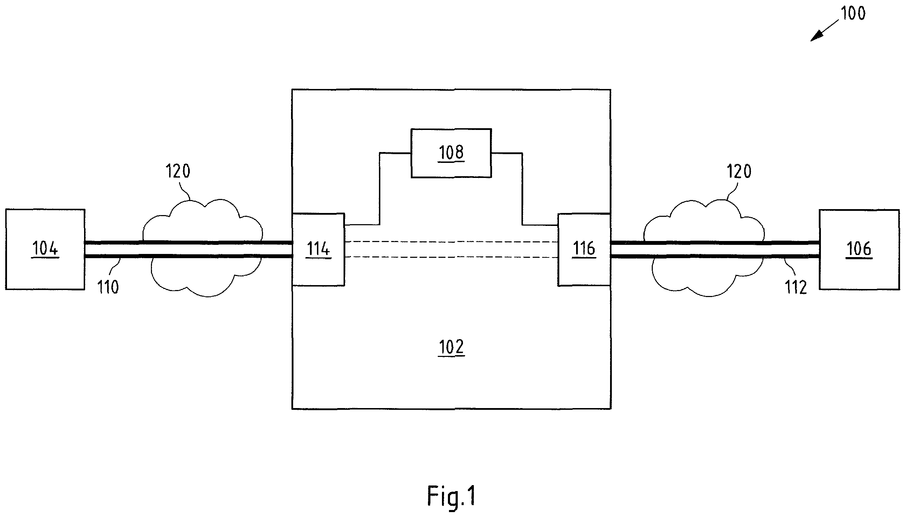

Figure 1 shows a schematic view of an embodiment of a system 100 according to the present application. The communication system 100 comprises an embodiment of a connection apparatus 102 according to the present application. The system 100 may comprise at least one first device 104 and at least one second device 106. The first device 104, the second device 106 and the connection apparatus 102 are connectable to at least one network 120 (e.g. Internet based on a wired and/or wireless technology).

The first device 104 is a first computer device, e.g. in form of a tablet, smartphone, notebook, personal computer, smart watch, etc. The first device 104 can be operated by one or more user(s). In particular, the first device 104 can be used to control a second device 106 comprising, for example, at least one (not shown) industrial application.

As can be seen from figure 1, the connection apparatus 102 may comprise communication means 114,116 configured to establish a communication connection via the network 120 with (not shown) communication means of a further device 104, 106 connectable with the network 120. The connection apparatus 102, such as a server 102, comprises a connection controlling module 108 configured to control and manage the establishment of a secured application-level communication connection between the first device 104 and the second device 106. Upon establishment of the secured application-level communication connection data can be exchanged between the first device 104 and the second device 106.

It shall be understood that the network may be another network than the Internet. Further, the system can comprise two or more first devices and/or two or more second devices and/or two or more connection apparatuses.

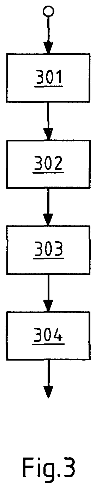

The operation of the system 100 will be explained in more details with the aid of figure 3. Figure 3 shows a diagram of an embodiment of a method according to the present application. The method can be used for establishing a secured application-level communication connection between at least one first device 104 and at least one second device 106 by means of the at least one connection apparatus 102.

In a first step 301, the connection control module 108 initiates transmitting of at least one second request message comprising at least one communication data set with at least one connection key to the second device 106 upon receipt of at least one first request message from the first device 104 for establishing the secured application-level communication connection.

In other words, the first device 104 requests to establish a secured application-level communication connection with the second device 106 by transmitting a respective request message to the connection apparatus 106. The first request message can comprise an information about the identity (e.g. identifier and/or communication address) of the second device 106 and/or instruction(s) for opening at least a first tunnel communication connection 110 with the connection apparatus 102 and/or for opening a second tunnel communication connection between the connection apparatus 102 and the second device 106.

The connection control module 108 causes the transmission of a second request message to the second device 106 via the network 120. The second request comprises a communication data set. This data set comprises at least one connection key. The second device 106 may open a second tunnel communication connection 112 based on the communication data set, in particular, the connection key. Further data needed for establishing the second tunnel communication connection, such as address data, can be included in the communication data set.

In a next step 302, the connection control module 108 checks the connection key used (by the second device 106) for establishing the second tunnel communication connection 112 between the connection apparatus 102 and the second device 106 based on the (previously) transmitted connection key. For instance, checking based on the transmitted connection key can comprise comparing the connection key used by the second device 106 for establishing the second tunnel connection with the transmitted key and/or an information (e.g. hash code of the key) relating to said key.

Then, in step 303, the connection control module causes establishing the tunnel communication connection between the devices 104, 106 by pairing (indicated by the dotted lines) at least the first tunnel communication connection 110 established between the first device 104 and the connection apparatus 106 with the second tunnel communication connection 112 based on the check result. In particular, if it follows from the check that the (correct) connection key has been used for establishing the second tunnel communication connection 112, which has been previously transmitted, the establishment of said tunnel might be enabled and both tunnel communication connections 110, 112 are paired together.

In following step 304, the establishment of the secured application-level communication connection over the established tunnel communication connection can occur. For instance, the first device (or second device) can cause said establishment of said connection over the tunnel connection. Data can be securely exchanged between first device 104 and the second device 106. As an example, a user can - by means of the first device 104 - configure and control the industrial appliance(s) of the second device 106 remotely. This includes e.g. providing of configuration parameters, such as machine speed, reporting of key parameters, diagnostics functions, connectivity management, software updates, update of security credentials and security policy.

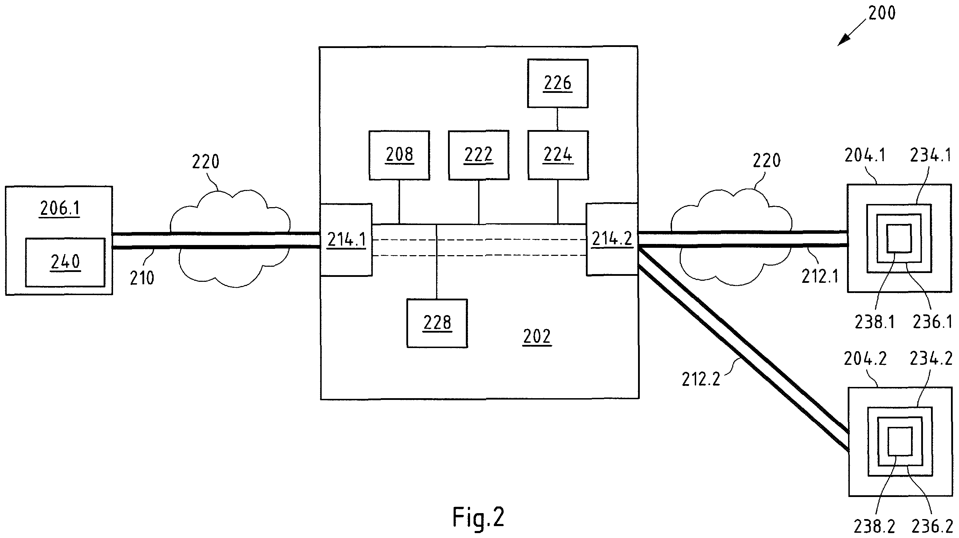

Figure 2 shows a schematic view of a further embodiment of a (communication) system 200 according to the present application. The depicted system 200 comprises a communication network 220 (e.g. Internet), a second device 206, a connection apparatus 202 and two first devices 204.1, 204.2. The connection apparatus 202 comprises a connection controlling module 208 configured to control and manage the establishment of a secured application-level communication connection between at least one of the first devices 204.1, 204.2 and the second device 206.

Furthermore, the connection apparatus 202 comprises at least one authentication module 222 configured to conduct at least one of an authentication process and an authorization process.

As can be further seen from figure 2, the connection apparatus 202 comprises at least one code storage module 226 and at least one code handler module 224. In addition, the depicted connection apparatus 202 includes a protocol handler module 228. It shall be understood that a module can be a software and/or hardware module. Further, hardware resources (processor, memory, etc.) can be shared by different modules. Eventually, the authentication module can comprise a first unit configured to conduct the authentication process and a further unit configured to conduct the authorization process.

The second device 206 may be a (industrial) machine 206 which can be remotely accessed e.g. for monitoring and/or controlling. In order to enable said remote access, the second device 206 can comprise a suitable application 240. In the present example, the second device 206 comprises a VNC server 240.

Further, each of the first devices 204.1, 204.2 can be a personal computer, tablet computer, smart phone, etc. and can comprise a local application 234.1, 234.2 (e.g. a web browser 234.1, 234.2) for accessing the network 220. Preferably, an application module 236.1, 236.2 (e.g. a device management app 236.1, 236.2) comprising, in particular, a VNC viewer 238.1, 238.2 can be embedded in the local application 234.1, 234.2 (e.g. a web browser 234.1, 234.2).

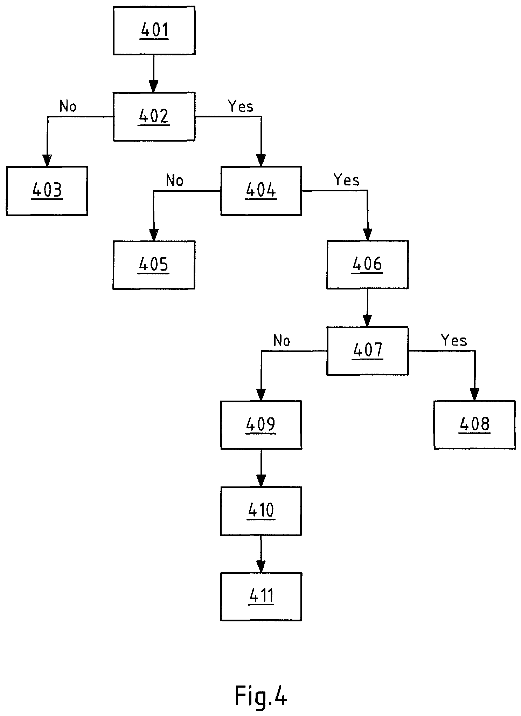

The functioning and operation of the system 200 will be explained with the aid of figure 4. Figure 4 shows a diagram of a further embodiment of a method according to the present application.

In a first step 401, the connection apparatus 202 can receive a first request message from one of the first devices 204.1, 204.2, such as 204.1. By way of example, a user requests via the local application 234.1 including module 236.1 to initiate remote access to a specific second device 206. The first device 204.1 may transmit a first request message comprising e.g. instructions to open/establish a secured application-level communication connection with a specific second device 206 and/or an (unique) identifier of the specific second device 206. In addition, the first request message can comprise an (unique) identifier of the sending first device 204.1 (and/or user of the first device). Such a message might be signed by the first device 204.1. Then, the local application 234.1 including module 236.1 may start to establish a first tunnel communication connection 210.1 (e.g. WebSocket may be used) from the first device 204.1 to the connection apparatus 202, such as a server 202 (e.g. a cloud hosted IoT platform 202).

Prior to or during the establishment of the first tunnel communication connection 210.1, in step 402 a authentication process can be conducted by means of the authentication module 222. In particular, it can be checked whether the first device 204.1 (and/or user of the first device 204.1) is actually authorized to establish the first tunnel communication connection 210.1 e.g. by checking at least one identifier (e.g. communication address, name of the user, signature and/or the like) and/or, for example, a secret information, such as a password or the like. Preferably, the connection apparatus 202 can comprise and/or be connected to a (not shown) database comprising respective information of (all) authorized first device(s) and/or user(s).

Based on the result of the authentication process, the method can be cancelled in step 403, if the first device 204.1 or its user is not authorized or the method can be continued with step 404.

In step 404, prior to, during or after establishment of the first tunnel communication connection 210.1 an authorization process can be conducted by means of the authentication module 222. In particular, the authentication module 222 may check the user's authorization and/or first device's authorization to establish a (secured) connection to the specific second (remote) device 206. For instance, in the above described database access permissions to one or more second device(s) can be stored together with each identifier of a first device 204.1, 204.2 and/or user of a first device 204.1, 204.2. Based on the information about the second device 206 in the first request message and the information stored in the database the authentication module 222 can check the authorization of the user and/or first device 204.1. If the user and/or first device 204.1 is not entitled to access the requested second device 206, the method can be stopped in step 405. Otherwise the method is continued with step 406.

In particular, if authentication and authorization processes are successful, the first request message (or its data content) can be forwarded to the connection controlling module 208 configured to manage the end-to-end remote access from the first device 204.1 to the second device 206.

It shall be understood that steps 402 and 404 can be conducted in parallel and e.g. in one combined step, respectively.

In step 406, the connection controlling module 208 causes the transmission of a second request message to the specific second device 206. The second request message comprises a communication data set needed by the second device 206 to establish a second tunnel communication connection 212 between the connection apparatus 202 and the second device 206. The communication data set comprises at least a connection key needed to open/establish the second tunnel communication connection 212 by the second device 206. Preferably, the connection controlling module 208 initiates sending of a second request message to the second device 206 which comprises an instruction to open a second tunnel communication connection 212 (e.g. a WebSocket connection 212), address information (IP, port) for the connection and said connection key. Upon receipt of the second request message, the second device 206 may (start to) open the second tunnel communication connection 212 (e.g. a WebSocket connection 212) to the connection apparatus 202 using the given connection key.

In one embodiment, it may be necessary to conduct a further authentication process/step (not shown). In particular, it may be required that the first device 204.1 must be authenticated by the second device 206 e.g. prior to or during the establishment of the second tunnel communication connection 212. Preferably, a code handler module 224 is configured to control the further authentication process. The code handler module 224 can initiate the transmission of an authentication data set comprising a code to the second device 206. For instance, the code handler module 224 may cause that the authentication data set is already inserted into the second request message. Alternatively, e.g. based on a previous receipt of an authentication request message from the second device 206 the code handler module 224 can cause transmission of an authentication response message comprising the authentication data set. The code may be a password or a key or the like.

Preferably, the at least one code can be securely stored in a code storage module 226. In other words, the code handler module 224 may be configured to intercept application level authentication requests to insert the code required for application level authentication. Preferably (each) code can be pre-provisioned to the connection apparatus 202 from (each) first device(s) 204.1, 204.2 and, in particular, securely (encrypted) stored in the code storage module 226. In that scenario there is no need for application level authentication from the user's device 204.1, 204.2. The user or his first device 204.1, 204.2 has already been authenticated prior to or during establishment of the first tunnel communication connection 210.1 (see step 402 and/or 404). The application level authentication may (only) take place between connection apparatus 202 and second device 206. Thus, this mechanism provides a single-sign-on capability.

In the next step 407, the connection controlling module 208 checks whether a second device 206 establishes or starts to establish the second tunnel communication connection 212 based on the previously provided connection key. The connection controlling module 208 may, in particular, check whether the used connection key is valid, e.g. corresponds to the previously transmitted connection key (or e.g. a hash code of the transmitted key). Optionally, the second device 206 may be authenticated during a fourth authentication process.

For instance, if the connection key is found then the connection controlling module 208 initiates pairing of the second tunnel communication connection 212 (a second WebSocket connection) with the first tunnel communication connection 210.1 (a first WebSocket connection) already established between the first device 204.1 and the connection apparatus 202 (indicated by the dotted lines in figure 2). In other words, both tunnel endpoints can be matched together and the secured end-to-end connection between remote device 206 and user's computer 204 can be established. Upon establishment of the tunnel communication connection between devices 204, 206, a secured application-level communication connection can be created over the established tunnel communication connection.

Preferably, the system 200 enables the establishment of secured application-level communication connections between two or more first devices 204.1, 204.2 and a (single) specific second device 206 at the same time. In such a scenario, the further first device 204.2 may act similar to the first first device 204.1 (see steps 401 to 406). In step 407, the connection controlling module 208 may pair a further first tunnel communication connection 210.2 with the (already) established (and operated) second tunnel communication connection 212. In particular, the exemplified application protocol, e.g. VNC, may also support providing simultaneous access from several instances of the application to one second device. This means that the connection apparatus may match one single device-server WebSocket to several WebSocket connections from server to several first computer devices.

If the connection key is not valid the method is stopped (step 408). Otherwise, it is continued with step 409. In step 409, upon establishment of the tunnel communication connection and the secured application-level communication connection, data can be exchanged between the at least one first device 204.1 and the second device 206 via the established secured tunnel communication connections 210.1, 212. In particular, the respective instances of the remote management application on the user's computer 204.1 (e.g. VNC viewer 238.1) and the second device 206 (e.g. VNC server 240) can establish a session. When established, the data traffic may flow from the user's computer 204.1 over a first WebSocket connection 210.1 to the server 202. The server 202 may then direct the data traffic from the first WebSocket 210.1 to the corresponding WebSocket connection 212 of the respective second device 206. The data traffic may then flow over the second WebSocket 212 to the second device 206.

It might be possible that a first device 204.1 and a second device 206 do not support the same tunnel protocol. In a preferred optional step 410, a protocol handler module may be configured to convert/adapt a data set received via a tunnel communication connection such that it can be forwarded via a further tunnel communication connection. The server 202 might comprise as an optional component a (application) protocol handler 228.

The application protocol handler 228 can be configured to get awareness of the application protocol and its versions used by devices. For instance, the server may inspect the respective messages from the first device(s) 204.1, 204.2 and the second device 206. The application protocol handler 228 can then act if needed.

In a first sub-step, the protocol handler module 228 may check whether the first device 204.1, 204.2 and the second device 206 support the same version and/or type of tunnel protocol. Such information may be stored in e.g. the above database. Alternatively, a data set received from a device 204, 206 can be analyzed in order to determine the actually used tunnel protocol. Alternatively or additionally, the protocol handler module 228 may initiate sending of a respective request message to the respective devices 204, 206 in order to obtain an answer about the possible tunnel protocol type(s) and/or version(s). If the same tunnel protocol is used, there are no further actions to be taken by the protocol handler module 228.

Furthermore, the protocol handler module 228 may comprise an adaption function for adapting different versions of the same tunnel protocol used by the first device 204 and by the second device 206.

Alternatively or additionally, the protocol handler module 228 may comprise a protocol conversion function configured to convert a data set between different tunnel protocols implemented on the first device 204 and on the second device 206 (e.g. converting VNC to RDP or vice versa).

In step 411, after the session between first and second device 204, 206 the secured connection can be disconnected. The disconnection may be controlled by the connection controlling module 208.

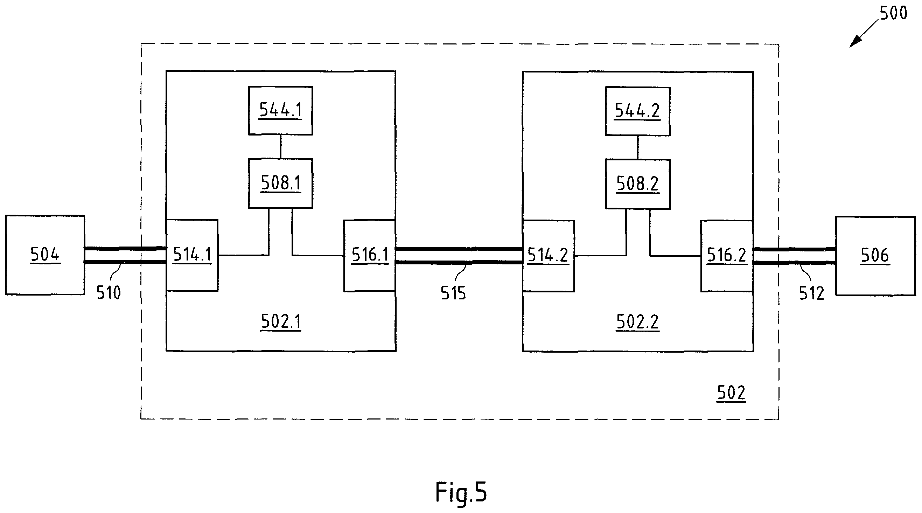

Figure 5 shows a schematic view of a further embodiment of a system 500 according to the present application. The (communication) system 500 comprises a first device 504, a second device 506 and a connection apparatus 502. The first and second devices 504, 506 may be similar configured as described above.

The connection apparatus 502 and connection arrangement 502, respectively, comprises at least two (computer) nodes 502.1, 502.2. For the sake of clarity, only two nodes 502.1, 502.2 are depicted. Each node 502.1, 502.2 can comprise a connection controlling module 508.1, 508.2 and an information storage module 544.1, 544.2. The connection apparatus 502 is, in particular, a distributed server 502. In order to avoid repetitions, only the differences between the previous embodiments (see figures 1 to 4) and the embodiment of figure 5 are described hereinafter.

Generally, in a cloud based server architecture scalability and load balancing can be achieved by virtualizing a logical server across several physical server instances also called nodes.

For such a connection apparatus 502, this means that the two endpoints (first (computer) device 504 and second device 506) can be connected to different (server) nodes 502.1, 502.2. The present application provides a new mechanism for forwarding messages between nodes 502.1, 502.2 of a connection apparatus 502 to enable the end-to-end tunnel communication connection establishment across different nodes.

Preferably, upon establishment of a first tunnel communication connection 510 (e.g. WebSocket connection) between the first device 504 and the connection apparatus 502, in particular, node 502.1, the first connection controlling module 508.1 initiates transmitting of at least an information (e.g. a hash code) relating to the connection data set, in particular, to the connection key, to the at least one further node 502.2. It is also possible that said information is transmitted during or prior to establishment of a first tunnel communication connection. In particular, the transmission can be initiated upon a positive authentication result of the authentication process.

Preferably, the server node 502.1 may generate a broadcast message to all other server nodes, wherein the message comprises as an information, preferably, a hash code of the connection key. In other words, the connection controlling module 508.1 is informing all nodes that they should accept incoming second tunnel communication connection requests (e.g. WebSockets requests) with the respective connection key.

The broadcast may take place via REST (Representational State Transfer) operation(s), or, via a MQTT (Message Queuing Telemetry Transport) broker which needs to be configured accordingly, or via another mechanism.

The connection key may be only a secret for establishing the second tunnel communication connection 512 and e.g. not needed to identify the first device's WebSocket node. Hence, only the hash code of the connection key may be distributed to other nodes. The hash code is, preferably, stored in an information storage module 544.1, 544.2, in particular, a cache 544.1, 544.2 on e.g. all nodes 502.1, 502.2 for some predefined time (e.g. at least 10 seconds, e.g. 5 minutes). For security reasons the hash code may be removed from all nodes as soon as the secured application-level communication connection drops. This may avoid denial of service attack via flooding the connection key cache.

As the second device 506 may be always the second peer to connect, the connection controlling module 508.2 has to match the device's WebSocket endpoint to a computer's WebSocket endpoint which may be on a different server node, and thus, may generate a third tunnel communication connection 515 or the like. This may be achieved as follows:
When a device connects or tries to connect to e.g. a WebSocket endpoint (or another means) the respective connection controlling module 508.2 may check if the connection key is present on the local node 502.2. If the connection key is detected on the local node 502.2 then the connection 512 should be established, as described above. If the connection key is not detected (found) on the local node 502.1, 502.2 then the respective connection controlling module 508.1, 508.2 may look up the hash code (or a similar information) of the connection key in the respective cache 544.2. If the connection key hash code (or a similar information) is not found then the creation of the second tunnel communication 512 should fail. If the connection key hash code (or a similar information) is found then a forwarding tunnel 515 for the specific device WebSocket endpoint rule is created and a secured connection can be established.

The present application provides various benefits compared with prior art solutions in given problem space. No VPN clients need to be installed at a first device and/or a second device. Further, no VPN setup is needed. The user doesn't need to know any connection or tunneling parameters besides e.g. an URI or an URL comprising the identifier (ID) of the second device to connect to said device. There is less traffic usage compared to normal VPN traffic. Further, there are no IP address conflicts. The local IP address ranges do not conflict with the end user computer device (first device) address range. In addition, a more secure solution is provided compared to typical VPN solutions. The second device does not open any port to the wide area network e.g. for the application. Further, the embedded single-sign-on functionality avoids that the users have to deal with the application passwords themselves (typically leads to using the same password for different application instances, and to shared password usage by many users). Further, the present application may provide for an improved usability via "One click launch": Launch remote access with one click (instead of doing VPN log-in first, then application launch, then application log-in). In addition, "Single-sign-on" service can be provided by the present application. Applications can be launched from a browser. No additional software beyond web browser may be needed. Application traffic may be always encrypted between the first and the second device. Server and application level credentials, and access control can all be managed by the connection apparatus in form of a server. A simplified, fine grained user management and authorization handled by the connection apparatus, such as a cloud server, e.g. regarding remote application access for a specific second device can be provided. The present solution may integrate application protocol adaption/conversion. Eventually, the present solution may be very scalable.

## Claims

1. Connection apparatus (102, 202, 502), in particular, a connection server (102, 202, 502), for establishing a secured application-level communication connection between at least one first device (104, 204.1, 204.2, 504) and at least one second device (106, 206, 506), the connection apparatus (102, 202, 502) comprising:
- at least one connection controlling module (108, 208, 508.1, 508.2) configured to initiate transmitting of at least one second request message comprising at least one communication data set with at least one connection key to the second device (106, 206, 506) upon receipt of at least one first request message from the first device (104, 204.1, 204.2, 504) for establishing the secured application-level communication connection,
- wherein the at least one connection key is a secret information needed to establish at least one second tunnel communication connection (112, 212, 512) between the second device (106, 206, 506) and the connection apparatus (102, 202, 502),
- wherein the connection controlling module (108, 208, 508.1, 508.2) is configured to check a connection key used by the second device (106, 206, 506) for establishing the at least one second tunnel communication connection (112, 212, 512) between the connection apparatus (102, 202, 502) and the second device (106, 206, 506) at least based on the previously transmitted at least one connection key,
- wherein the connection controlling module (108, 208, 508.1, 508.2) is configured to establish a secured tunnel communication connection by pairing at least a first tunnel communication connection (110, 210.1, 210.2, 510) established between the first device (104, 204.1, 204.2, 504) and the connection apparatus (102, 202, 502) with the second tunnel communication connection (112, 212, 512) based on the check result, and
- wherein the secured tunnel communication connection is established such that the secured application-level communication connection can be established over the established secured tunnel communication connection,
- wherein the connection apparatus (502) comprises a first node (502.1) with a first connection controlling module (508.1) connectable to at least one further node (502.2) with a further connection controlling module (508.2) and wherein the first tunnel communication connection is established between the first device and the first node,
- wherein the first connection controlling module (508.1) is configured to initiate transmitting at least an information relating to the at least one connection key to the at least one further node (502.2),
- wherein the at least one further node (502.2) comprises an information storage module (544.2) configured to store the received information relating to the at least one connection key,
- wherein the further connection controlling module (508.2) of the further node (502.2) is configured to check the connection key used for establishing the at least one second tunnel communication connection (512) between the further node (502.2) of the connection apparatus (502) and the second device (506) based on the stored information relating to the at least one connection key, and
- wherein the further connection controlling module (508.2) is configured to establish at least a third tunnel communication connection (515) between the further node (502.2) and the first node (502.1) based on the check result.

2. Connection apparatus (102, 202, 502) according to claim 1, **characterized in that**
- the connection apparatus (102, 202, 502) comprises at least one authentication module (222) configured to conduct at least one authentication process for authenticating the first device (104, 204.1, 204.2, 504) and/or at least one user of the first device (104, 204.1, 204.2, 504) prior to or during the establishment of the first tunnel communication (110, 210.1, 210.2, 510), and
- wherein the establishment of the first tunnel communication connection (110, 210.1, 210.2, 510) depends on the authentication result of the authentication process.

3. Connection apparatus (102, 202, 502) according to claim 2, **characterized in that**
- the authentication module (222) is configured to conduct at least one authorization process for checking the authorization of the first device (104, 204.1, 204.2, 504) and/or the user of the first device (104, 204.1, 204.2, 504) to initiate a secured application-level communication connection with the second device (106, 206, 506), and
- wherein the initiating of the transmission of the second request message to the second device (106, 206, 506) depends on the authentication result of the authorization process.

4. Connection apparatus (102, 202, 502) according to any of the preceding claims, **characterized in that** the connection apparatus (102, 202, 502) comprises at least one protocol handler module (228) configured to change a received data set transmitted in accordance with a first protocol in accordance with a further protocol, wherein the further protocol is used to forward the received data set.

5. Connection apparatus (102, 202, 502) according to claim 4, **characterized in that**
- the protocol handler module (228) is configured to compare a first protocol used for data transmission via the first tunnel communication connection (110, 210.1, 210.2, 510) with a second protocol used for data transmission via the second tunnel communication connection (112, 212, 512), and
- wherein the protocol handler module (228) is configured to change a received data set based on the comparison result.

6. Connection apparatus (102, 202, 502) according to claim 4 or 5, **characterized in that**
- the protocol handler module (228) is configured to change a received data set by adapting a first protocol version to a second protocol version,
and/or
- the protocol handler module (228) is configured to change a received data set by converting a first protocol type to a second protocol type.

7. Connection apparatus (102, 202, 502) according to any of the preceding claims, **characterized in that**
- the connection apparatus (102, 202, 502) comprises at least one code storage module (226) configured to store at least one code required to authenticate a first device (104, 204.1, 204.2, 504) or a user of the first device (104, 204.1, 204.2, 504) to the second device (106, 206, 506) and/or an appliance of the second device (106, 206, 506), and
- at least one code handler module (224) configured to conduct a further authentication process with the second device (106, 206, 506) and/or an appliance of the second device (106, 206, 506) by using the stored code.

8. Connection apparatus (102, 202, 502) according to claim 7, **characterized in that** the code handler module (224) is configured to conduct the further authentication process by initiating of transmitting of an authentication data set comprising the code to the second device (106, 206, 506).

9. Connection apparatus (102, 202, 502) according to any of the preceding claims, **characterized in that** the connection controlling module (108, 208, 508.1, 508.2) is configured to establish a tunnel communication connection between a first device (204.1) and the second device (206) and at least one further first device (204.2) and the second device (206) by pairing a first tunnel communication connection (210.1) established between the first device (104.1) and the connection apparatus (202) with the second tunnel communication connection (212) and by pairing a further first tunnel communication connection (210.2) established between the further first device (204.2) and the connection apparatus (202) with the second tunnel communication connection (212).

10. Connection apparatus (102, 202, 502) according to any of the preceding claims, **characterized in that**
- the first node (502.1) is configured to transmit said information to all other nodes (502.2) in order to inform all other nodes (502.2) about the information.

11. Connection apparatus (102, 202, 502) according to any of the preceding claims , **characterized in that**
- the information is a hash code of the at least one connection key, and/or
- the information storage module (544.1, 544.2) is configured to store the information until expiry of a predefined time limit.

12. Connection apparatus (102, 202, 502) according to any of the preceding claims, **characterized in that**
- the first tunnel communication connection (110, 210.1, 210.2, 502) is established between a local application of the first device (104, 204.1, 204.2, 504) and the connection apparatus (102, 202, 502), and
- the local application is a Virtual Network Computing application.

13. System (100, 200, 500), comprising:
- at least one first device (104, 204.1, 204.2, 504),
- at least one second device (106, 206, 506), and
- at least one connection apparatus (102, 202, 502) according to any of the preceding claims.

14. Method for establishing a secured application-level communication connection between at least one first device (104, 204.1, 204.2, 504) and at least one second device (106, 206, 506) by means of at least one connection apparatus (102, 202, 502), the method comprising:
- initiating of transmitting of at least one second request message comprising at least one communication data set with at least one connection key to the second device (106, 206, 506) upon receipt of at least one first request message from the first device (104, 204.1, 204.2, 504) for establishing the secured application-level communication connection,
- wherein the at least one connection key is a secret information needed to establish at least one second tunnel communication connection (112, 212, 512) between the second device (106, 206, 506) and the connection apparatus (102, 202, 502),
- checking a connection key used by the second device (106, 206, 506) for establishing the at least one second tunnel communication connection (112, 212, 512) between the connection apparatus (102, 202, 502) and the second device (106, 206, 506), the checking being based on the previously transmitted at least one connection key,
- establishing a secured tunnel communication connection by pairing at least a first tunnel communication connection (110, 210.1, 210.2, 510) established between the first device (104, 204.1, 204.2, 504) and the connection apparatus (102, 202, 502) with the second tunnel communication connection (112, 212, 512) based on the check result, and
- wherein the secured tunnel communication connection is established such that the secured application-level communication connection can be established over the established secured tunnel communication connection,
- wherein the connection apparatus (502) comprises a first node (502.1) with a first connection controlling module (508.1) connectable to at least one further node (502.2) with a further connection controlling module (508.2) and wherein the first tunnel communication connection is established between the first device and the first node,
- wherein the first connection controlling module (508.1) initiates transmitting at least an information relating to the at least one connection key to the at least one further node (502.2),
- wherein e received information relating to the at least one connection key ist stored by an information storage module (544.2) of the at least one further node (502.2),
- wherein the further connection controlling module (508.2) of the further node (502.2) checks the connection key used for establishing the at least one second tunnel communication connection (512) between the further node (502.2) of the connection apparatus (502) and the second device (506) based on the stored information relating to the at least one connection key, and
- wherein the further connection controlling module (508.2) establishes at least a third tunnel communication connection (515) between the further node (502.2) and the first node (502.1) based on the check result.

15. A computer program with instructions executable on a processor of the connection apparatus (102, 202, 502) such that a connection apparatus (102, 202, 502) is operated according to the method according to claim 14.

## Patentansprüche

1. Verbindungsvorrichtung (102, 202, 502), insbesondere ein Verbindungsserver (102, 202, 502), zum Herstellen einer gesicherten Kommunikationsverbindung auf Anwendungsebene zwischen mindestens einem ersten Gerät (104, 204.1, 204.2, 504) und mindestens einem zweiten Gerät (106, 206, 506), wobei die Verbindungsvorrichtung (102, 202, 502) umfasst:
- mindestens ein Verbindungssteuerungsmodul (108, 208, 508.1, 508.2), eingerichtet zum Initiieren eines Übertragens mindestens einer zweiten Anforderungsnachricht, die mindestens einen Kommunikationsdatensatz mit mindestens einem Verbindungsschlüssel umfasst, an das zweite Gerät (106, 206, 506) nach Empfang mindestens einer ersten Anforderungsnachricht von dem ersten Gerät (104, 204.1, 204.2, 504) zum Herstellen der gesicherten Kommunikationsverbindung auf Anwendungsebene,
- wobei der mindestens eine Verbindungsschlüssel eine geheime Information ist, die benötigt wird, um mindestens eine zweite Tunnelkommunikationsverbindung (112, 212, 512) zwischen dem zweiten Gerät (106, 206, 506) und der Verbindungsvorrichtung (102, 202, 502) herzustellen,
- wobei das Verbindungssteuerungsmodul (108, 208, 508.1, 508.2) eingerichtet ist zum Überprüfen eines Verbindungsschlüssels, der von dem zweiten Gerät (106, 206, 506) zum Herstellen der mindestens einen zweiten Tunnelkommunikationsverbindung (112, 212, 512) zwischen der Verbindungsvorrichtung (102, 202, 502) und der zweiten Vorrichtung (106, 206, 506) verwendet wird, zumindest auf der Grundlage des zuvor übertragenen mindestens einen Verbindungsschlüssels,
- wobei das Verbindungssteuerungsmodul (108, 208, 508.1, 508.2) eingerichtet ist zum Herstellen einer gesicherten Tunnelkommunikationsverbindung durch Koppeln mindestens einer ersten Tunnelkommunikationsverbindung (110, 210.1, 210.2, 510), die zwischen dem ersten Gerät (104, 204.1, 204.2, 504) und der Verbindungsvorrichtung (102, 202, 502) hergestellt ist, mit der zweiten Tunnelkommunikationsverbindung (112, 212, 512) auf der Grundlage des Prüfergebnisses, und
- wobei die gesicherte Tunnelkommunikationsverbindung hergestellt wird, derart, dass die gesicherte Kommunikationsverbindung auf Anwendungsebene über die hergestellte gesicherte Tunnelkommunikationsverbindung hergestellt werden kann,
- wobei die Verbindungsvorrichtung (502) einen ersten Knoten (502.1) mit einem ersten Verbindungssteuerungsmodul (508.1) umfasst, der mit mindestens einem weiteren Knoten (502.2) mit einem weiteren Verbindungssteuerungsmodul (508.2) verbindbar ist, und wobei die erste Tunnelkommunikationsverbindung zwischen dem ersten Gerät und dem ersten Knoten hergestellt ist,
- wobei das erste Verbindungssteuerungsmodul (508.1) eingerichtet ist zum Initiieren eines Übertragens von mindestens einer Information in Bezug auf den mindestens einen Verbindungsschlüssels an den mindestens einen weiteren Knoten (502.2),
- wobei der mindestens eine weitere Knoten (502.2) ein Informationsspeichermodul (544.2) umfasst, eingerichtet zum Speichern der empfangenen Informationen in Bezug auf den mindestens einen Verbindungsschlüssel speichert,
- wobei das weitere Verbindungssteuerungsmodul (508.2) des weiteren Knotens (502.2) eingerichtet ist zum Überprüfen des Verbindungsschlüssels, der zum Herstellen der mindestens einen zweiten Tunnelkommunikationsverbindung (512) zwischen dem weiteren Knoten (502.2) der Verbindungsvorrichtung (502) und dem zweiten Gerät (506) verwendet wird, basierend auf der gespeicherten Information in Bezug auf den mindestens einen Verbindungsschlüssels zu überprüfen, und
- wobei das weitere Verbindungssteuerungsmodul (508.2) eingerichtet ist zum Herstellen mindestens einer dritten Tunnelkommunikationsverbindung (515) zwischen dem weiteren Knoten (502.2) und dem ersten Knoten (502.1) basierend auf dem Prüfergebnis.

2. Verbindungsvorrichtung (102, 202, 502) nach Anspruch 1, **dadurch gekennzeichnet, dass**
- die Verbindungsvorrichtung (102, 202, 502) mindestens ein Authentifizierungsmodul (222) umfasst, eingerichtet zum Durchführen mindestens eines Authentifizierungsprozesses zum Authentifizieren des ersten Geräts (104, 204.1, 204.2, 504) und/oder mindestens eines Benutzers des ersten Geräts (104, 204.1, 204.2, 504) vor oder während des Herstellen der ersten Tunnelkommunikation (110, 210.1, 210.2, 510), und
- wobei das Herstellen der ersten Tunnelkommunikationsverbindung (110, 210.1, 210.2, 510) von dem Authentifizierungsergebnis des Authentifizierungsprozesses abhängt.

3. Verbindungsvorrichtung (102, 202, 502) nach Anspruch 2, **dadurch gekennzeichnet, dass**
- das Authentifizierungsmodul (222) eingerichtet ist zum Durchführen mindestens eines Authentifizierungsprozesses zum Überprüfen der Authentifizierung des ersten Geräts (104, 204.1, 204.2, 504) und/oder des Benutzers des ersten Geräts (104, 204.1, 204.2, 504), um eine gesicherte Kommunikationsverbindung auf Anwendungsebene mit dem zweiten Gerät (106, 206, 506) zu initiieren, und
- wobei das Initiieren der Übertragung der zweiten Anforderungsnachricht an das zweite Gerät (106, 206, 506) von dem Authentifizierungsergebnis des Authentifizierungsprozesses abhängt.

4. Verbindungsvorrichtung (102, 202, 502) nach einem der vorhergehenden Ansprüche, **dadurch gekennzeichnet, dass** die Verbindungsvorrichtung (102, 202, 502) mindestens ein Protokoll-Handhabungs-Modul (228) umfasst, eingerichtet zum Ändern eines empfangenen Datensatzes, der gemäß einem ersten Protokoll übertragen wurde, entsprechend einem weiteren Protokoll, wobei das weitere Protokoll verwendet wird, um den empfangenen Datensatz weiterzuleiten.

5. Verbindungsvorrichtung (102, 202, 502) nach Anspruch 4, **dadurch gekennzeichnet, dass**
- das Protokoll-Handhabungs-Modul (228) eingerichtet ist zum Vergleichen eines ersten Protokolls, das für die Datenübertragung über die erste Tunnelkommunikationsverbindung (110, 210.1, 210.2, 510) verwendet wird, mit einem zweiten Protokoll, das für die Datenübertragung über die zweite Tunnelkommunikationsverbindung (112, 212, 512) verwendet wird, und
- wobei das Protokoll-Handhabungs-Modul (228) eingerichtet ist zum Ändern eines empfangenen Datensatzes basierend auf dem Vergleichsergebnis.

6. Verbindungsvorrichtung (102, 202, 502) nach Anspruch 4 oder 5, **dadurch gekennzeichnet, dass**
- das Protokoll-Handhabungs-Modul (228) eingerichtet ist zum Ändern eines empfangenen Datensatzes durch Anpassen einer ersten Protokollversion an eine zweite Protokollversion,
und/oder
- das Protokoll- Handhabungs-Modul (228) eingerichtet ist zum Ändern eines empfangenen Datensatzes durch Umwandeln eines ersten Protokolltyps in einen zweiten Protokolltyp.

7. Verbindungsvorrichtung (102, 202, 502) nach einem der vorhergehenden Ansprüche, **dadurch gekennzeichnet, dass**
- die Verbindungsvorrichtung (102, 202, 502) mindestens ein Codespeichermodul (226) umfasst, eingerichtet zum Speichern mindestens eines Codes, der erforderlich ist, um ein erstes Gerät (104, 204.1, 204.2, 504) oder einen Benutzer des ersten Geräts (104, 204.1, 204.2, 504) gegenüber dem zweiten Gerät (106, 206, 506) und/oder einer Einrichtung des zweiten Geräts (106, 206, 506) zu authentifizieren, und
- mindestens ein Code-Handhabungs-Modul (224), eingerichtet zum Durchführen eines weiteren Authentifizierungsprozesses mit dem zweiten Gerät (106, 206, 506) und/oder einer Einrichtung des zweiten Geräts (106, 206, 506) unter Verwendung des gespeicherten Codes.

8. Verbindungsvorrichtung (102, 202, 502) nach Anspruch 7, **dadurch gekennzeichnet, dass** das Code-Handhabungs-Modul (224) eingerichtet ist zum Durchführen des weiteren Authentifizierungsprozesses durch Initiieren eines Übertragens eines den Code umfassenden Authentifizierungsdatensatzes an das zweite Gerät (106, 206, 506).

9. Verbindungsvorrichtung (102, 202, 502) nach einem der vorhergehenden Ansprüche, **dadurch gekennzeichnet, dass** das Verbindungssteuerungsmodul (108, 208, 508.1, 508.2) eingerichtet ist zum Herstellen einer Tunnelkommunikationsverbindung zwischen einem ersten Gerät (204.1) und dem zweiten Gerät (206) und mindestens einem weiteren ersten Gerät (204.2) und dem zweiten Gerät (206) durch Koppeln einer ersten Tunnelkommunikationsverbindung (210.1), die zwischen dem ersten Gerät (104.1) und der Verbindungsvorrichtung (202) hergestellt ist, mit der zweiten Tunnelkommunikationsverbindung (212) und durch Koppeln einer weiteren ersten Tunnelkommunikationsverbindung (210.2), die zwischen dem weiteren ersten Gerät (204.2) und der Verbindungsvorrichtung (202) hergestellt ist, mit der zweiten Tunnelkommunikationsverbindung (212).

10. Verbindungsvorrichtung (102, 202, 502) nach einem der vorhergehenden Ansprüche, **dadurch gekennzeichnet, dass**
- der erste Knoten (502.1) eingerichtet ist zum Übertragen der genannten Information an alle anderen Knoten (502.2), um alle anderen Knoten (502.2) über die Information zu informieren.

11. Verbindungsvorrichtung (102, 202, 502) nach einem der vorhergehenden Ansprüche, **dadurch gekennzeichnet, dass**
- die Information ein Hash-Code des mindestens einen Verbindungsschlüssels ist, und/oder
- das Informationsspeichermodul (544.1, 544.2) eingerichtet ist zum Speichern der Information bis zu einem Ablauf eines vordefinierten Zeitlimits.

12. Verbindungsvorrichtung (102, 202, 502) nach einem der vorhergehenden Ansprüche, **dadurch gekennzeichnet, dass**
- die erste Tunnelkommunikationsverbindung (110, 210.1, 210.2, 502) zwischen einer lokalen Anwendung des ersten Geräts (104, 204.1, 204.2, 504) und der Verbindungsvorrichtung (102, 202, 502) hergestellt ist, und
- die lokale Anwendung eine Virtual Network Computing-Anwendung ist.

13. System (100, 200, 500), umfassend:
- mindestens ein erstes Gerät (104, 204.1, 204.2, 504),
- mindestens ein zweites Gerät (106, 206, 506), und
- mindestens eine Verbindungsvorrichtung (102, 202, 502) nach einem der vorhergehenden Ansprüche.

14. Verfahren zum Herstellen einer gesicherten Kommunikationsverbindung auf Anwendungsebene zwischen mindestens einem ersten Gerät (104, 204.1, 204.2, 504) und mindestens einem zweiten Gerät (106, 206, 506) mittels mindestens einer Verbindungsvorrichtung (102, 202, 502), wobei das Verfahren umfasst:
- Initiieren eines Übertragens mindestens einer zweiten Anforderungsnachricht, die mindestens einen Kommunikationsdatensatz mit mindestens einem Verbindungsschlüssel umfasst, an das zweite Gerät (106, 206, 506) nach einem Empfang mindestens einer ersten Anforderungsnachricht von dem ersten Gerät (104, 204.1, 204.2, 504) zum Herstellen der gesicherten Kommunikationsverbindung auf Anwendungsebene,
- wobei der mindestens eine Verbindungsschlüssel eine geheime Information ist, die benötigt wird, um mindestens eine zweite Tunnelkommunikationsverbindung (112, 212, 512) zwischen dem zweiten Gerät (106, 206, 506) und der Verbindungsvorrichtung (102, 202, 502) herzustellen,
- Überprüfen eines Verbindungsschlüssels, der von dem zweiten Gerät (106, 206, 506) zum Herstellen der mindestens einen zweiten Tunnelkommunikationsverbindung (112, 212, 512) zwischen der Verbindungsvorrichtung (102, 202, 502) und dem zweiten Gerät (106, 206, 506) verwendet wird, wobei das Überprüfen auf dem zuvor übertragenen mindestens einen Verbindungsschlüssel basiert,
- Herstellen einer gesicherten Tunnelkommunikationsverbindung durch Koppeln mindestens einer ersten Tunnelkommunikationsverbindung (110, 210.1, 210.2, 510), die zwischen dem ersten Gerät (104, 204.1, 204.2, 504) und der Verbindungsvorrichtung (102, 202, 502) hergestellt wurde, mit der zweiten Tunnelkommunikationsverbindung (112, 212, 512) basierend auf dem Prüfergebnis, und
- wobei die gesicherte Tunnelkommunikationsverbindung hergestellt wird, derart, dass die gesicherte Kommunikationsverbindung auf Anwendungsebene über die hergestellte gesicherte Tunnelkommunikationsverbindung hergestellt werden kann,
- wobei die Verbindungsvorrichtung (502) einen ersten Knoten (502.1) mit einem ersten Verbindungssteuerungsmodul (508.1) umfasst, der mit mindestens einem weiteren Knoten (502.2) mit einem weiteren Verbindungssteuerungsmodul (508.2) verbindbar ist, und wobei die erste Tunnelkommunikationsverbindung hergestellt wird zwischen dem ersten Gerät und dem ersten Knoten,
- wobei das erste Verbindungssteuerungsmodul (508.1) das Übertragen mindestens einer Information in Bezug auf den mindestens einen Verbindungsschlüssel an den mindestens einen weiteren Knoten (502.2) initiiert,
- wobei eine empfangene Information in Bezug auf den mindestens einen Verbindungsschlüssel von einem Informationsspeichermodul (544.2) des mindestens einen weiteren Knotens (502.2) gespeichert wird,
- wobei das weitere Verbindungssteuerungsmodul (508.2) des weiteren Knotens (502.2) den Verbindungsschlüssel, der zum Herstellen der mindestens einen zweiten Tunnelkommunikationsverbindung (512) zwischen dem weiteren Knoten (502.2) der Verbindungsvorrichtung (502) und dem zweiten Gerät (506) verwendet wird, basierend auf der gespeicherten Information in Bezug auf den mindestens einen Verbindungsschlüssels überprüft, und
- wobei das weitere Verbindungssteuerungsmodul (508.2) mindestens eine dritte Tunnelkommunikationsverbindung (515) zwischen dem weiteren Knoten (502.2) und dem ersten Knoten (502.1) basierend auf dem Prüfergebnis herstellt.

15. Computerprogramm mit Anweisungen, die auf einem Prozessor der Verbindungsvorrichtung (102, 202, 502) ausführbar sind, so dass eine Verbindungsvorrichtung (102, 202, 502) gemäß dem Verfahren nach Anspruch 14 betrieben wird.

## Revendications

1. Appareil de connexion (102, 202, 502), en particulier, un serveur de connexion (102, 202, 502), pour établir une connexion de communication sécurisée au niveau d'une application entre au moins un premier dispositif (104, 204.1, 204.2, 504) et au moins un second dispositif (106, 206, 506), l'appareil de connexion (102, 202, 502) comprenant :
- au moins un module de commande de connexion (108, 208, 508.1, 508.2) configuré pour initier la transmission d'au moins un second message de demande comprenant au moins un ensemble de données de communication avec au moins une clé de connexion au second dispositif (106, 206, 506) lors de la réception d'au moins un premier message de demande provenant du premier dispositif (104, 204.1, 204.2, 504) pour établir la connexion de communication sécurisée au niveau application,
- où l'au moins une clé de connexion est une information secrète nécessaire pour établir au moins une deuxième connexion de communication par tunnel (112, 212, 512) entre le deuxième dispositif (106, 206, 506) et l'appareil de connexion (102, 202, 502),
- où le module de commande de connexion (108, 208, 508.1, 508.2) est configuré pour vérifier une clé de connexion utilisée par le second dispositif (106, 206, 506) pour établir l'au moins une seconde connexion de communication par tunnel (112, 212, 512) entre l'appareil de connexion (102, 202, 502) et le second dispositif (106, 206, 506) au moins sur la base de l'au moins une clé de connexion transmise précédemment,
- où le module de commande de connexion (108, 208, 508.1, 508.2) est configuré pour établir une connexion de communication par tunnel sécurisée en appariant au moins une première connexion de communication par tunnel (110, 210.1, 210.2, 510) établie entre le premier dispositif (104, 204.1, 204.2, 504) et l'appareil de connexion (102, 202, 502) avec la deuxième connexion de communication par tunnel (112, 212, 512) sur la base du résultat de la vérification, et
- où la connexion de communication par tunnel sécurisée est établie de telle sorte que la une connexion de communication sécurisée au niveau application peut être établie sur la connexion de communication par tunnel sécurisée établie,
- où l'appareil de connexion (502) comprend un premier nœud (502.1) avec un premier module de commande de connexion (508.1) pouvant être connecté à au moins un nœud supplémentaire (502.2) avec un module de commande de connexion (508.2) supplémentaire et
- où la première connexion de communication par tunnel est établie entre le premier dispositif et le premier nœud,
- où le premier module de commande de connexion (508.1) est configuré pour initier la transmission d'au moins une information relative à l'au moins une clé de connexion à l'au moins un nœud (502.2) supplémentaire,
- où l'au moins un nœud supplémentaire (502.2) comprend un module de stockage d'informations (544.2) configuré pour stocker les informations reçues relatives à l'au moins une clé de connexion,
- où le module de commande de connexion supplémentaire (508.2) du nœud supplémentaire (502.2) est configuré pour vérifier la clé de connexion utilisée pour établir l'au moins une seconde connexion de communication par tunnel (512) entre le nœud supplémentaire (502.2) de l'appareil de connexion (502) et le second dispositif (506) sur la base des informations stockées relatives à l'au moins une clé de connexion, et
- où le module de commande de connexion supplémentaire (508.2) est configuré pour établir au moins une troisième connexion de communication par tunnel (515) entre le nœud supplémentaire (502.2) et le premier nœud (502.1) sur la base du résultat de la vérification.

2. Appareil de connexion (102, 202, 502) selon la revendication 1, **caractérisé**
- **en ce que** l'appareil de connexion (102, 202, 502) comprend au moins un module d'authentification (222) configuré pour conduire au moins un processus d'authentification pour authentifier le premier dispositif (104, 204.1, 204.2, 504) et/ou au moins un utilisateur du premier dispositif (104, 204.1, 204.2, 504) avant ou pendant l'établissement de la première communication par tunnel (110, 210.1, 210.2, 510), et
- où l'établissement de la première connexion de communication par tunnel (110, 210.1, 210.2, 510) dépend du résultat d'authentification du processus d'authentification.

3. Appareil de connexion (102, 202, 502) selon la revendication 2, **caractérisé**
- **en ce que** le module d'authentification (222) est configuré pour conduire au moins un processus d'autorisation pour vérifier l'autorisation du premier dispositif (104, 204.1, 204.2, 504) et/ou de l'utilisateur du premier dispositif (104, 204. 1, 204.2, 504) à initier une connexion de communication sécurisée au niveau de application avec le deuxième dispositif (106, 206, 506), et
- où l'initiation de la transmission du deuxième message de demande au deuxième dispositif (106, 206, 506) dépend du résultat d'authentification du processus d'autorisation.

4. Appareil de connexion (102, 202, 502) selon l'une quelconque des revendications précédentes, **caractérisé en ce que** l'appareil de connexion (102, 202, 502) comprend au moins un module de gestion de protocole (228) configuré pour changer un ensemble de données reçu transmis conformément à un premier protocole conformément à un protocole supplémentaire, dans lequel le protocole supplémentaire est utilisé pour transmettre l'ensemble de données reçu.

5. Appareil de connexion (102, 202, 502) selon la revendication 4, **caractérisé**
- **en ce que** le module de traitement de protocole (228) est configuré pour comparer un premier protocole utilisé pour la transmission de données via la première connexion de communication par tunnel (110, 210.1, 210.2, 510) avec un second protocole utilisé pour la transmission de données via la seconde connexion de communication par tunnel (112, 212, 512), et
- où le module de traitement de protocole (228) est configuré pour changer un ensemble de données reçues sur la base du résultat de la comparaison.

6. Appareil de connexion (102, 202, 502) selon la revendication 4 ou 5, **caractérisé**
- **en ce que** le module de traitement de protocole (228) est configuré pour changer un ensemble de données reçues en adaptant une première version de protocole à une deuxième version de protocole,
et/ou
- le module de traitement de protocole (228) est configuré pour changer un ensemble de données reçues en convertissant un premier type de protocole en un second type de protocole.

7. Appareil de connexion (102, 202, 502) selon l'une quelconque des revendications précédentes, **caractérisé en ce que** l'appareil de connexion (102, 202, 502) comprend
- au moins un module de stockage de code (226) configuré pour stocker au moins un code requis pour authentifier un premier dispositif (104, 204.1, 204.2, 504) ou un utilisateur du premier dispositif (104, 204. 1, 204.2, 504) auprès du second dispositif (106, 206, 506) et/ou auprès d'un appareil du second dispositif (106, 206, 506), et
- au moins un module de traitement de code (224) configuré pour conduire un processus d'authentification supplémentaire avec le second dispositif (106, 206, 506) et/ou un appareil du second dispositif (106, 206, 506) en utilisant le code stocké.

8. Appareil de connexion (102, 202, 502) selon la revendication 7, **caractérisé en ce que** le module de traitement de code (224) est configuré pour conduire le processus d'authentification supplémentaire en initiant la transmission d'un ensemble de données d'authentification comprenant le code au second dispositif (106, 206, 506).

9. Appareil de connexion (102, 202, 502) selon l'une quelconque des revendications précédentes, **caractérisé en ce que** le module de commande de connexion (108, 208, 508.1, 508.2) est configuré pour établir une connexion de communication par tunnel entre un premier dispositif (204.1) et le second dispositif (206) et au moins un premier dispositif supplémentaire (204.2) et le second dispositif (206) en appariant une première connexion de communication par tunnel (210. 1) établie entre le premier dispositif (104.1) et l'appareil de connexion (202) avec la deuxième connexion de communication par tunnel (212) et en appariant une première connexion de communication par tunnel supplémentaire (210.2) établie entre le premier dispositif supplémentaire (204.2) et l'appareil de connexion (202) avec la deuxième connexion de communication par tunnel (212).

10. Appareil de connexion (102, 202, 502) selon l'une quelconque des revendications précédentes, **caractérisé**
- **en ce que** le premier nœud (502.1) est configuré pour transmettre lesdites informations à tous les autres nœuds (502.2) afin d'informer tous les autres nœuds (502.2) des informations.

11. Appareil de connexion (102, 202, 502) selon l'une quelconque des revendications précédentes, **caractérisé**
- **en ce que** l'information est un code de hachage de l'au moins une clé de connexion, et/ou
- **en ce que** le module de stockage d'informations (544.1, 544.2) est configuré pour stocker l'information jusqu'à l'expiration d'un délai prédéfini.

12. Appareil de connexion (102, 202, 502) selon l'une quelconque des revendications précédentes, **caractérisé**
- **en ce que** la première connexion de communication tunnel (110, 210.1, 210.2, 502) est établie entre une application locale du premier dispositif (104, 204.1, 204.2, 504) et l'appareil de connexion (102, 202, 502), et
- **en ce que** l'application locale est une application de Virtual Network Computing.

13. Système (100, 200, 500) comprenant :
- au moins un premier dispositif (104, 204.1, 204.2, 504),
- au moins un deuxième dispositif (106, 206, 506), et
- au moins un appareil de connexion (102, 202, 502) selon l'une quelconque des revendications précédentes.

14. Procédé pour établir une connexion de communication sécurisée au niveau application entre au moins un premier dispositif (104, 204.1, 204.2, 504) et au moins un deuxième dispositif (106, 206, 506) au moyen d'au moins un appareil de connexion (102, 202, 502), le procédé comprenant :
- déclencher la transmission d'au moins un deuxième message de demande comprenant au moins un ensemble de données de communication avec au moins une clé de connexion au deuxième dispositif (106, 206, 506) lors de la réception d'au moins un premier message de demande provenant du premier dispositif (104, 204.1, 204.2, 504) pour établir la connexion de communication sécurisée au niveau application,
- où l'au moins une clé de connexion est une information secrète nécessaire pour établir au moins une deuxième connexion de communication par tunnel (112, 212, 512) entre le deuxième dispositif (106, 206, 506) et l'appareil de connexion (102, 202, 502),
- vérifier une clé de connexion utilisée par le second dispositif (106, 206, 506) pour établir l'au moins une seconde connexion de communication par tunnel (112, 212, 512) entre l'appareil de connexion (102, 202, 502) et le second dispositif (106, 206, 506), la vérification étant basée sur l'au moins une clé de connexion transmise précédemment,
- établir une connexion de communication par tunnel sécurisée en appariant au moins une première connexion de communication par tunnel (110, 210.1, 210.2, 510) établie entre le premier dispositif (104, 204.1, 204.2, 504) et l'appareil de connexion (102, 202, 502) avec la deuxième connexion de communication par tunnel (112, 212, 512) sur la base du résultat de la vérification, et
- où la connexion de communication par tunnel sécurisée est établie de telle sorte que la connexion de communication de niveau application sécurisée peut être établie sur la connexion de communication par tunnel sécurisée établie,
- où le dispositif de connexion (502) comprend un premier nœud (502.1) avec un premier module de commande de connexion (508.1) pouvant être connecté à au moins un nœud supplémentaire (502.2) avec un module de commande de connexion supplémentaire (508.2) et
- où la première connexion de communication par tunnel est établie entre le premier dispositif et le premier nœud,
- où le premier module de commande de connexion (508.1) initie la transmission d'au moins une information relative à l'au moins une clé de connexion à l'au moins un nœud supplémentaire (502.2),
- où l'information reçue relative à la au moins une clé de connexion est stockée par un module de stockage d'informations (544.2) de l'au moins un nœud supplémentaire (502.2),
- où le module de commande de connexion supplémentaire (508.2) du nœud supplémentaire (502.2) vérifie la clé de connexion utilisée pour établir l'au moins une seconde connexion de communication par tunnel (512) entre le nœud supplémentaire (502.2) de l'appareil de connexion (502) et le second dispositif (506) sur la base des informations stockées concernant l'au moins une clé de connexion, et
- où le module de commande de connexion supplémentaire (508.2) établit au moins une troisième connexion de communication par tunnel (515) entre le nœud supplémentaire (502.2) et le premier nœud (502.1) sur la base du résultat de la vérification.

15. Programme informatique avec des instructions exécutables sur un processeur de l'appareil de connexion (102, 202, 502) de sorte qu'un appareil de connexion (102, 202, 502) est exploité selon le procédé selon la revendication 14.
